Europäisches Patentamt

European Patent Office

Office européen des brevets

(19)

(11) **EP 1 351 160 A1**

(12) **EUROPEAN PATENT APPLICATION**

(43) Date of publication:
08.10.2003 Bulletin 2003/41

(51) Int Cl.⁷: **G06F 17/30**

(21) Application number: 02007742.6

(22) Date of filing: 05.04.2002

(84) Designated Contracting States:
**AT BE CH CY DE DK ES FI FR GB GR IE IT LI LU MC NL PT SE TR**
Designated Extension States:
**AL LT LV MK RO SI**

(71) Applicant: **HYPERWAVE Software Forschungs- und Entwicklungs GmbH**
**8010 Graz (AT)**

(72) Inventors:
• **Kappe, Frank, Dr.**
**8042 Graz (AT)**

• **Kienreich, Wolfgang**
**8020 Graz (AT)**
• **Sabol, DI Vedran**
**8020 Graz (AT)**

(74) Representative: **Maiwald Patentanwalts GmbH**
**Elisenhof,**
**Elisenstrasse 3**
**80335 München (DE)**

(54) **Data visualization system**

(57) A data processing system comprising means for determining a similarity between subcollections, means for determining first coordinates to the subcollections in accordance with the similarity and means for locating areas to the subcollections and a collection comprising these subcollections. There are further provided means for positioning the areas of the first and second subcollections within the area of the collection in accordance with the coordinates of the first and second subcollections, means for calculating a further similarity between first and second information elements and means for positioning the first and second information elements within the area of the respective subcollection comprising the first and second information element.

**FIG.1**

EP 1 351 160 A1

**EP 1 351 160 A1**

## Description

The present invention relates to data processing systems, and in particular, to a method for displaying information, a data processing system for displaying information, a computer program product stored on a computer usable medium and to a computer program product directly loadable into an internal memory of a digital computer.

## Background of the invention

A data processing system may be an individual computer comprising a processor, an internal memory, a storage, a display and an operating system to interconnect these elements such that they are interacting with each other. A data processing system may also be a communications network through which a number of computers may interconnect and communicate. The largest and best known computer communications network today is the Internet, a computer communications network based on worldwide data and telephone networks. The Internet is a network of networks, all available for the exchange of information. A combination of the Internet with interconnecting computers results in a web, the best known one is commonly referred to today as the worldwide web ('WEB'). The Internet interconnects every computer on the Internet with every other computer on the Internet. The computers connected to a network have various functions and purposes. Some of the interconnected computers are functioning as part of the network itself, i.e., controlling the routing and passage of data to and from various network nodes. Other interconnecting computers have files of information that are accessible by other computers connected to the network. Other computers are connected to the network by a user to obtain such files of information.

In large networks such as WEB, the amount of information available is substantial because of the number of sites on the WEB with available information. In recent years, the amount of information available has grown exponentially and will probably continue to do so for the foreseeable future. The challenge is how to find a specific item of information hidden in the enormous amount of information available. Thus, the interactive visualization of very large, hierarchically structured document collections or information collections as well as a visualization of results of retrieval operations executed on such collections has recently received much attention. With the ever-increasing number of documents and/or information stored on the WEB or within corporate intranets, flat repositories containing the documents and/or information are increasingly and inevitably replaced by hierarchical structures for organizing documents and/or information into collections.

There are two basic approaches focusing on the interactive visualization of very large document collections available.

The first approach focuses on inter-documents similarity. However, this approach is only applicable for flat, unstructured repositories. A document corpus is represented by using maps or landscapes and a similarity of documents is shown by a proximity of these documents in these maps or landscapes. However, as already mentioned, this first basic approach is only applicable for flat repositories and unable for handling hierarchies.

The second basic approach focuses on navigation in hierarchically organized repositories such as documents classified according to a library classification scheme. Hierarchical structures may also be inferred from more heavily interlinked structures such as the WEB or computer networks.

US 5,619,632 describes a two-dimensional tree browser which utilizes hyperbolic geometry to display an entire hierarchy on a two-dimensional display. The tree is laid out by using hyperbolic axes (which are infinite) and are then mapped to a two-dimensional unitary disk for display. Areas in a center of the disk are in focus and are clearly visible. However, areas in the proximity of the margin of the disk become infinitely small and are no longer discernible.

US 2001/0035885 Al describes a graphical gateway to a computer network providing a text representation on any WEB or network directory on a two-dimensional surface. Various distinct categories included within the network directory are spread across the two-dimensional surface used as display screen and circled by polygon-shaped borders. The result is a 'state" map created from a directory tree that has been mapped. A similarity or dissimilarity with respect to the content of two sites is expressed by a distance between these two sites.

All of the approaches presented above, are insufficient with respect to a representation of visualization of very large (up to millions of entities of information or documents) hierarchically structured information repositories.

## Summary of the invention

It is an object of the present invention to provide a method and means for the easy handling of very large hierarchically structured information repositories.

This object is solved with a method for displaying information comprising a plurality of information elements on a two-dimensional display with the features of claim 1.

It is to be understood, that the first number of information elements is to be interpreted as relating to the total number of information elements comprised in the first subcollection, comprised in any collection comprised in the first

EP 1 351 160 A1

subcollection and/or is comprised in any further subcollection comprised in the first subcollection. So is the second number of information elements.

Advantageously, this method allows to explore very large hierarchically structured repositories containing information elements. The hierarchical organization of the information and inter-information similarity is represented within a single, consistent visualization. Furthermore, according to the method of claim 1, a global and a local view of the information elements on the two-dimensional display is integrated into one seamless visualization.

Furthermore, the above object is solved by a data processing system for displaying information with the features of claim 23.

Advantageously, the data processing system according to the present invention as set forth in claim 23 is very stable.

The above object is also solved by a computer program product stored on a computer usable medium with the features of claim 44.

Furthermore, the above object is solved by a computer program product directly loadable into an internal memory of a digital computer with the features of claim 45.

Advantageous exemplary embodiments of the present invention are set forth in the dependent claims.

In the following, the present invention will be explained in further detail in accordance with exemplary embodiments.

A brief description of the drawing:

Fig. 1    shows an exemplary embodiment of the data processing system according to the present invention.
Fig. 2    shows a further exemplary embodiment of the data processing system according to the present invention.
Fig. 3    shows a flow chart of an exemplary embodiment of the method for displaying information according to the present invention.
Fig. 4    shows a flow chart concerning an exemplary embodiment of steps S4 and S10 of fig. 3.
Fig. 5    shows a flow chart concerning an exemplary embodiment of steps S5 and S11 of fig. 3
Fig. 6    shows a flow chart concerning an exemplary embodiment of steps S6 of fig. 3.
Fig. 7    shows a Voronoi diagram for further explaining step S6 of fig. 3.
Fig. 8    shows a further Voronoi diagram for further explaining step S6 of fig. 3.
Fig. 9    shows an exemplary embodiment of an image displayed on a display according to the present invention.
Fig. 10   shows another exemplary embodiment of an image displayed on the display according to the present invention.
Fig. 11   shows yet another exemplary embodiment of an image displayed on the display according to the present invention.
Fig. 12   shows yet another exemplary embodiment of an image displayed on the display according to the present invention.

Detailed description of the present invention

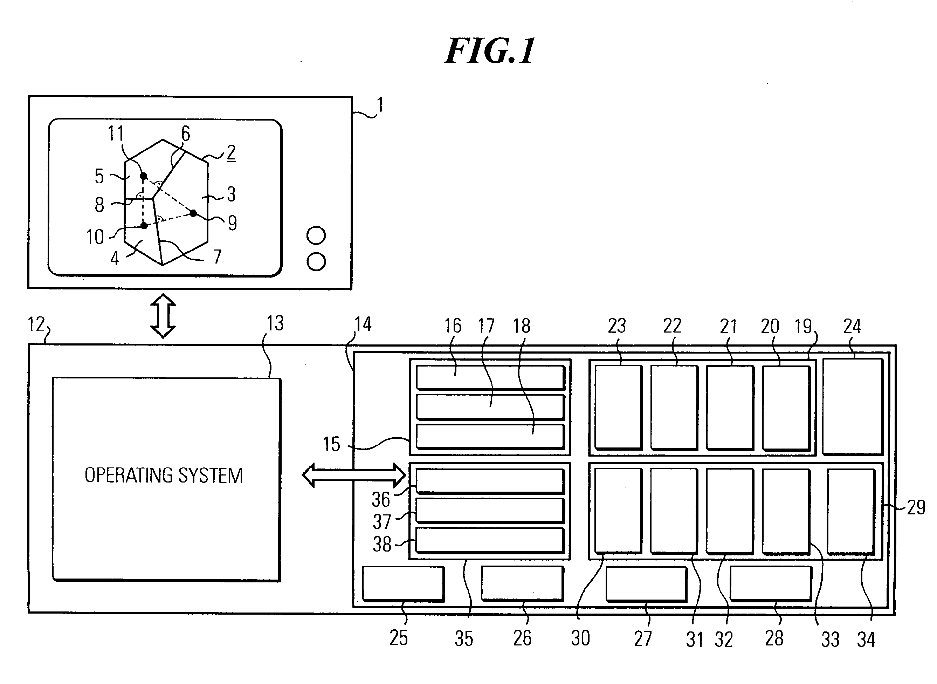

Figure 1 shows a first exemplary embodiment of the data processing system for displaying information according to the present invention. Information contains information elements. Information elements are any kind of structured or unstructured information carrying entities for which a similarity to other information elements can be computed. E.g. information elements can be pictures, audio information, customer records, personal records, database records, tactile information or biometric information. The information elements for explanation purposes in this exemplary embodiment are documents.

For the following explanation, it is assumed that the documents are organized in a hierarchy of collections and subcollection. Such a hierarchy is called collection hierarchy. Documents, subcollections and collections can be members of more than one parent collection. However, cycles are explicitly disallowed. Such a structure is called a directed acyclic graph. In such a directed acyclic graph, no path starts and ends at the same vertex and edges of such a graph are ordered pairs of vertices. A graph is defined as a list of vertices of a graph where each vertex has an edge from it to the next vertex. A vertex is also often referred to as a node. An example for such a collection hierarchy is a classification scheme such as IPC. Such a taxonomy is usually maintained manually by an editorial staff. However, the collection hierarchy could also be generated or extracted semi-automatically or automatically.

Documents are assumed to have significant textual content, which may be extracted if necessary with respective tools. Documents are typically PDF, HTML or word documents, but may also comprise spread sheets, tables or graphics.

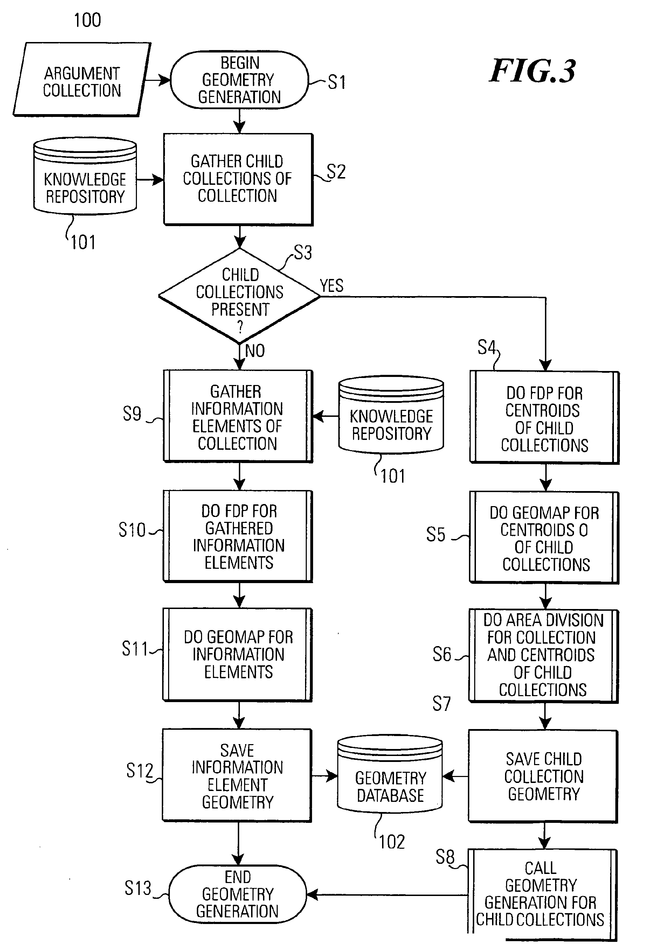

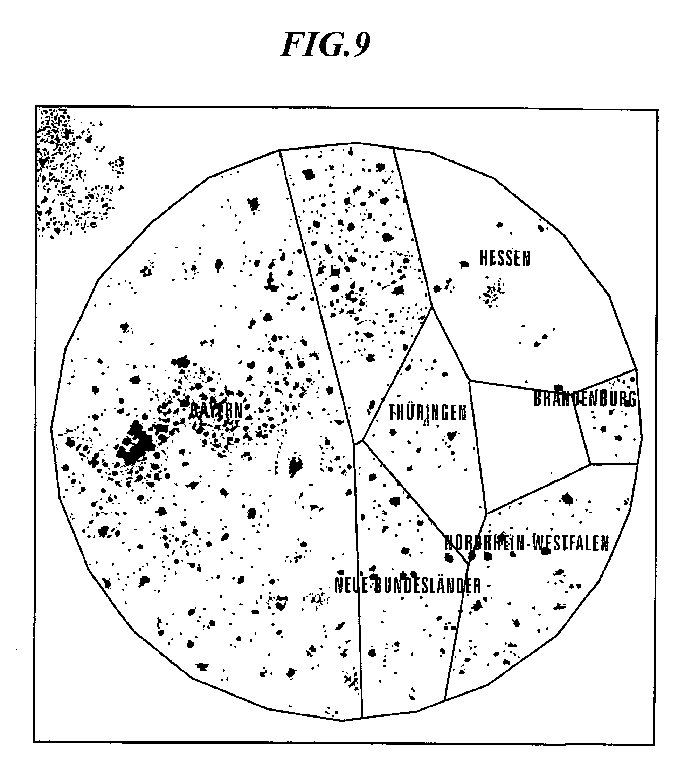

On display 1 in figure 1, there is displayed a collection 2 comprising three subcollections, 3, 4 and 5. The collection 2 is displayed by means of a first polygon having a first area corresponding to the amount of documents, information elements, subcollections and collections comprised therein. This first area is subdivided by means of bisectors 6, 7 and 8. in the areas of the subcollection 3, 4 and 5, are shown centroids 9, 10 and 11. An exemplary embodiment of a method for generating such an image on display 1 will be described with reference to figures 3 to 8. Further examples of images visualizing collections will be described with reference to figures 9 to 12.

The display 1 is connected to a calculator section 12. The calculator section 12 comprises an operating system 13 and a processing section 14. There is a communication connection between the processing section 14, the operating system 13 and the display 1. The processing section 14 comprises means for determining a first similarity between the first subcollection and the second subcollection 15.

The means for determining the first similarity between the first subcollection and the second subcollection 15 comprises means for calculating a first centroid for a first subcollection and a second centroid for the second subcollection 16, means for determining the first similarity between the first subcollection and the second subcollection by calculating a third similarity 17 and means for calculating the first coordinates 18.

Furthermore, processing section 14 comprises means for determining first coordinates for the first subcollection and the second subcollection 19. The means for determining first coordinates for the first subcollection and the second subcollection 19 comprise means for determining a fourth force 20, means for determining a third force 21, means for determining a second force 22 and means for generating second coordinates 23.

Furthermore, the processing section 14 comprises means for positioning the first information element and the second information element. Reference number 25 refers to means for controlling the display 1. Reference number 26 refers to means for allocating a third area to the subcollection.

The processing section 14 furthermore comprises means for allocating a second area having second boundaries to the first subcollection 27 and means for allocating a first area having first boundaries to the collection 28.

Furthermore, the processing section 14 comprises means for calculating a second similarity between a first information element and a second information element 29. The means for calculating a second similarity between a first information element and a second information element 29 comprise means for calculating the third coordinates 30, means for generating force coordinates 31, means for determining a sixth force 32, means for determining a seventh force 33 and means for determining an eight force 34.

The processing section 14 furthermore comprises means for positioning the second and third areas 35. The means for positioning the second and third areas 35 comprise means for arranging 36, means for determining which of the first and second weights is smaller 37 and means for determining a center 38.

In an alternative exemplary embodiment, all or some elements of the processing section 14 may be realized as computer readable program means, as modules of program written in a specific programming language. It is also possible, to use programmable chips such as FPGAs or EPLDs, e.g. the FPGAs/EPLDs made by Altera® for the elements comprised in the processing section 14.

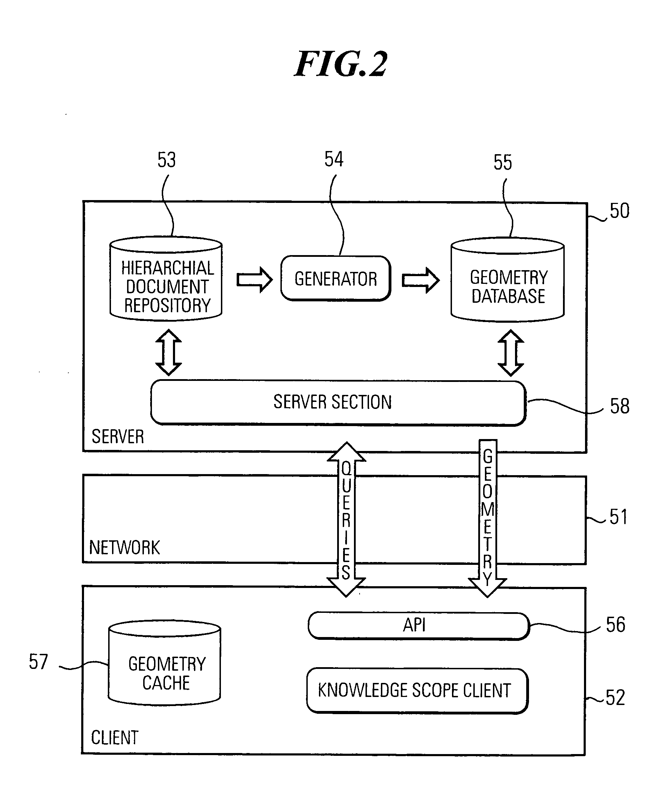

Figure 2 shows a further exemplary embodiment of the data processing system for displaying information according to the present invention. In figure 2, reference number 50 designates a server which is connected to a network 51 which is connected to a client 52. Such a structure is usually referred to as client-server architecture. The server comprises a hierarchically document repository 53 which is connected to a generator 54 which is connected to a geometry database 55. The hierarchical document repository 53 and the geometry database 55 are connected to a server section 58. The server 50 transmit a geometry generated by the server section 58 via network 51 to an API 56 at the client's side of the network 51. On the client's site, there is further provided a geometry cache 57. The client 52 and the server 50 exchange queries via network 51. If the first embodiment of figure 1 is realized in a client server architecture as shown in figure 1, all elements of the processing section 14 are in the server 50 whereas the display would be on the client's site.

Figure 3 shows an exemplary embodiment of the method for displaying information according to the present invention. Reference number 100 designates an argument. The argument 100 comprises a collection. The collection comprises a plurality of collections, subcollections and information elements such as documents. Each of the subcollections and collections comprised in the collection may comprise further collections, subcollections or information elements.

In the following, the exemplary embodiment of the method for displaying information according to the present invention is described with a collection, comprising a first subcollection and a second subcollection, the collection comprising a plurality of information elements. The first subcollection comprises a first number of information elements and the second subcollection comprises a second number of information elements.

The numbering of the subcollections and information elements is used for distinguishing the subcollections and information elements from each other and is in not to be interpreted as restriction with respect to the number of subcollection or information elements.

In step S1 a process called geometry generation starts with reading the argument. Then the processing proceeds to step S2, where child collections of the collection are read from a knowledge repository 101. In the present example, the first and the second subcollection are child-collections of the collection. Generally, a collection may also contain documents. In such a case, an additional artificial subcollection is generated and the documents are placed in this additional artificial subcollection. Then, from step S2, the method proceeds to step S3.

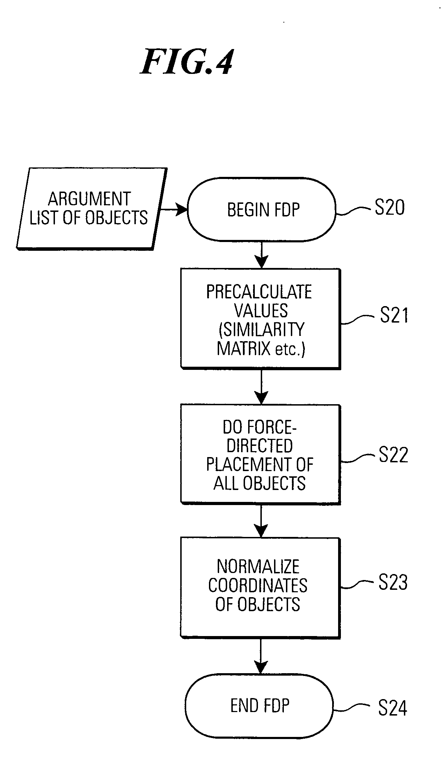

In step S3, there is a query whether there are child collections present or not. In case the question in S3 is answered with YES, i.e. there are child collections, the method continues to step S4. In step S4 a force-directed placement ('FDP') is carried out for the child collections. The FDP is an iterative method for mapping a set of high-dimensional vectors to a low-dimensional space while preserving a high-dimensional relation as far as possible. The algorithm calculates force vectors from similarities between respective elements. In the present example, in step S4, force-vectors are calculated from the similarities between a first centroid of the first subcollection and a second centroid of the second subcollection. A centroid is a respective center of gravity of the respective subcollection. In step S4, there are generated normalized coordinates for the centroids of the child collections, that is in the present example, normalized coordinates for the centroids of the first and second collections. Step S4 is described with further detail with reference to figure 4.

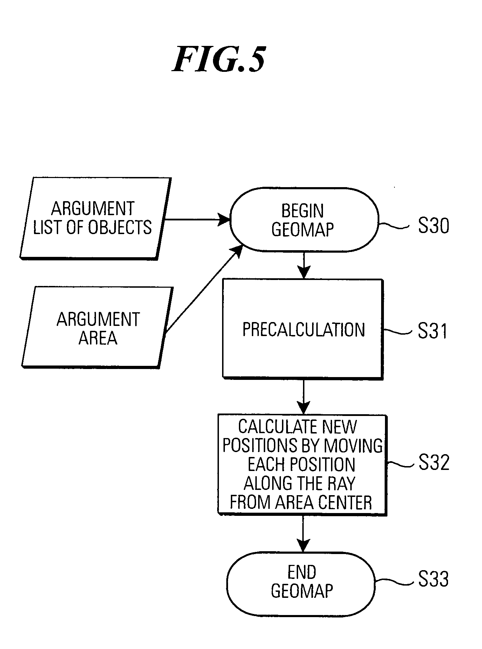

After step S4, the method proceeds to step S5 where a geomap procedure is carried out for the centroids of the child collections. In the present example, the geomap procedure is carried out for the centroids of the first and second subcollections. The purpose of the geomap procedure is to efficiently use an area allocated to the respective collection or respective subcollection. In the geomap procedure, areas are assigned to the child collections and the coordinates calculated for the centroids of the child collections are inscribed into these areas. Preferably these areas are polygons. With respect to the present example, a first area is assigned to the first subcollection and a second area is assigned to the second subcollection. A size of the first area corresponds to a number of information elements comprised in the first subcollection and a size of the second area corresponds to a number of information elements comprised in the second subcollection. In case the first subcollection comprises a further collection and a further subcollection, a total amount of information elements comprised in the first subcollection is calculated and is the basis for a size of the first area. The geomap procedure outputs new positions for the centroids of the child collections. Hence, with reference to the present example, the geomap procedure calculates new positions within the first and second areas for the centroid of the first and second subcollections. The geomap procedure carried in S5 will be described with more detail with reference to figure 5.

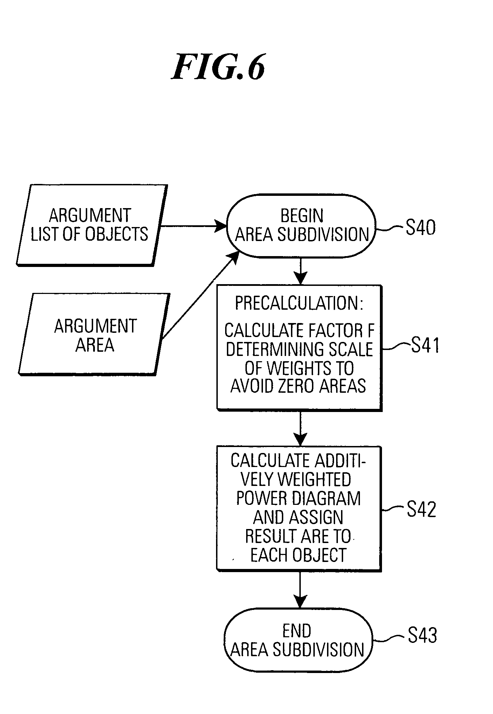

After step S5, the method proceeds to step S6, where an area division is carried for the centroid of child collections. With reference to the present example, an area division is carried out for the centroid of the first and second collection. In other words, in Step S6, all assigned areas comprising the respective information elements and centroids with the positions determined in step S5 are arranged such that the size of the respective area corresponds to the number of information elements comprised in the area and such that all areas are inscribed into one 'parent-area' assigned to the collection. With respect to the present example, the first and second area are inscribed into a third area which was allocated to the collection. Step S6 will be described with more detail with respect to figure 6.

After S6, the method proceeds to S7 where the results of S6 are saved in a geometry database 102. Then, the method continues to step S8 where the geometry generation is called again for the child collections. Thus, from step S8, the method recursively continues to step S1 which is carried out in the same way as before. The method continues then to step S2 which is carried out in the same way as before. And, in step S3, the query is carried out, whether there are child collections present or not. In case there are child collections, the method continues to step S4 and step S4 to S8 are carried out as described above. In case there are no child-collections present, the method continues to step S9.

In step S9, the information elements comprised in the collection are gathered from the knowledge repository 101. With respect to the present example, the information elements comprised in the first and second subcollections are gathered from the knowledge repository 101. Then, the method proceeds to step S10.

In step S10, the FDP is carried out for the information elements. This is carried out in the same way as described with reference to step S4, except that the FDP is carried out for the information elements and not for the centroids of child collections as in step S4. The FDP will be described in more detail with reference to figure 4. Then, the method proceeds to step S11.

In step S11, the geomap procedure is carried out for calculating coordinates and respective areas for the information elements. This is carried out in the same way as described with reference to step S5, except that the geomap procedure is carried out for the information elements. The geomap procedure will be described in more detail with reference to figure 5. Then, the method proceeds to step S12.

In step S12, a geometry of the information elements is stored in the geometry database 102. With respect to the present example, coordinates of the information elements of first and second subcollections are stored in the geometry data base. Then, the method proceeds to step S13 where the method ends. In the following, the force-directed placement will be described in more detail with reference to figure 4.

As already indicated with reference to figure 3, the method steps of figure 4 are performed in step S4 of figure 3 and in step S10 of figure 3. Since in step S4, the FDP is carried out for centroids of child collections and in step S10 for information elements, the term 'object" is used for referring to the centroids and the information elements together. In other words, if the method steps of figure 4 carried for step S4 of figure 3, the objects are centroids of child collections and if the steps of figure 4 are carried out for step S10 of figure 3, the objects are information elements.

Step S20 to S24 of figure 4 are an iterative method for mapping a set of high-dimensional vectors to a low-dimensional space, while preserving the high-dimensional relations as far as possible. These method steps determine force vectors from similarities between objects. These force vectors and further, custom-defined vectors influence positions i.e. coordinates of points representing the object at each iteration in this message.

The FDP starts in step S20 with reading the argument, namely a list of the respective objects. Then, the method continues to step both S21 where necessary values are precalculated. This will be described with further detail in the following.

The high-dimensional vector representation allows comparison of a pair of objects by computing a similarity between them. Here, a cosine similarity metric is used. If $D_i$ and $D_j$ are documents to be compared, L is the dimensionality of the high-dimensional space and $x_{iq}$ is the q'th component of the term vector which represents the object $D_i$. The cosine similarity of two objects $D_i$, $D_j$ is given by:

$$sim(D_i, D_j) = \frac{\sum_{k=1}^{L}(x_{i,k} x_{j,k})}{\sqrt{\sum_{k=1}^{L} x_{i,k}^2 \sum_{k=1}^{L} x_{j,k}^2}}.$$

In the above equation, $x_i$ and $x_j$ are feature vectors where vector components correspond to different features. Apart from the cosine similarity, other similarity coefficients can be used, such as Dice and Jaccard.

All inter-object similarity values, i.e. all similarities between all objects are precalculated and subsequently stored in a similarity matrix. With respect to the present example, in step S4 of figure 3, a similarity value is calculated for the centroids of the first and second subcollections. With respect to step S10 of figure 3 according to the present example, similarity values are calculated for the information elements. Then, the method continues to step S23.

In step S22, objects are initially placed randomly in a low-dimensional space and are then moved based on forces between the objects, wherein the forces are determined on the basis of the similarities between the objects. A low-dimensional space corresponds to the space of the display, i.e. the low-dimensional space is 1 dimensional for a 1 dimensional display, 2 dimensional for a 2 dimensional display and 3 dimensional for a 3 dimensional display etc. The forces preferably may respectively comprise an attractive component and a repulsive component. In the following, this will be described for an exemplary embodiment for a two-dimensional space wherein forces between two respective objects are respectively calculated.

The force $force(D_i\ D_j)$ between two objects has three components: An attractive component proportional to the similarity $sim(D_i, D_j)^d$ between the two objects, a repulsive component $1/(dist(D_i\ D_j))$ inversely proportional to a two-dimensional distance between these two objects and a weak gravitational component $grav$:

$$force(D_i, D_j) = sim(D_i, D_j)^d - \frac{w}{dist(D_i, D_j)} + grav$$

The first component, namely the attractive component pulls objects with similar content together. $d >= 1$ is a discriminator which is adjusted to characteristics of the similarity matrix calculated in step S21. With the discriminator $d$, a separation of a layout of the elements on the display can be improved significantly. The factor w is 1 in the case of placing documents (S10) and in the case of centroids (S4) proportional to the weight of the centroid, e.g. to the numbers of documents recursively contained in the corresponding collection.

The second component, i.e. the repulsive component pushes two objects apart and prevents them from coming too close. The third component, namely the gravitational component is a weak but constant gravitational force which provides cohesion to the object set by ensuring that even very dissimilar objects attract each other once they become very distant.

New coordinates of objects are calculated by letting one object interact with other objects from the list of objects followed by a subsequent averaging of the results over all interactions. For example, $D_i.x$, a new x-coordinate of object $D_i$, is calculated with the following equation. The other coordinates are calculated accordingly.

$$D_i.x = \frac{1}{N-1} \sum_{j=1, j \neq i}^{N} force(D_i, D_j) * D_j.x + (1 - force(D_i, D_j)) * D_i.x$$

Thus, at each iteration a new position is computed for every object and the iteration continues until a termination condition is satisfied. A commonly used termination condition of mechanical stress is computationally intensive. Therefore, a more light-weight, adaptive condition is used which can be summarized as: An execution terminates when object positions stabilized sufficiently or when a maximum number of iterations is reached.

Assuming a set of N objects, for the calculation of an influence of every object with respect to every other object, each object would have to interact with M=N-1 other objects. This results in a quadratic time complexity for each iteration. However, if M may be held constant, a linear execution time (per iteration) can advantageously be reached. To do this, a method described in Chalmers (1996). *A Linear Iteration Time Layout Algorithm for Visualizing High-Dimensional Data. In Proc. Visualization '96, pages 127-132, San Francisco, California (1996). IEEE Computer Society, http://www.dcs.gla.ac.uk /~matthew/papers/vis96.pdf*, which uses stochastic sampling, is used where each object maintains two small sets of constant size. A first set, which may also be called the random set, is filled with random elements during every iteration. And a second set, which may also be called neighbor set, maintains a list of similar, neighboring objects. In each iteration, members of the neighbor set are compared to new samples in the random set and are replaced by objects which are more similar. The combination of this processing combination with the invention method allows a very stable and fast calculation. Hence, a calculation time of the invention method is minimized and computing capabilities necessary in the data processing system according to the present invention are minimized.

For performance reasons, the invention method does not use any velocities or viscosities. As a result of the above described random sampling, a certain amount of jitter is introduced. This jitter causes a small inaccuracy of the computed position of the respective objects. However, this jitter proved to be useful for a avoiding local minima. In other words, the sampling described above introduces little computing overhead, but requires the same number or fewer iterations than a method without sampling in order to reach a stable layout.

Once a layout satisfying the termination condition has been calculated with the sampling procedure, a number of iterations are performed by using the process without sampling. The number of iterations without sampling is in relation to an amount of interactions performed by the sampling procedure. The effect is that the calculation time is not significantly increased. The performance of a few iterations with the process without sampling almost eliminates the layout inaccuracy introduced by the sampling, without compromising the time complexity.

By step S22 of figure 4 centroids having a smaller weight are places close to the center of the surrounding boundary polygon. Centroids having a higher weight are placed in a ring midway between the center of the polygon and its boundary. Thus, advantageously, a correspondence between the weight of the centroid and the size of the allocated area is achieved.

Once the force-directed placement ('FDP') of all objects is finished in step 22 and all respective coordinates are calculated for the object, the method continues to step S23 where the coordinates calculated in step S22 are normalized. After the normalization step S23, the method continues to step S24 where the FDP process ends.

In the following, the geomap procedure carried out in step S5 of figure 3 for centroids of child collections and in step S11 of figure 3 for information elements, is described in further detail with reference to figure 5. As mentioned with respect to figure 4, instead of information elements and instead of centroids of child collections, the term 'objects' is used. In step S30, where the geomap procedure begins, the argument of the procedure, namely the list of objects and the respective areas belonging to these objects are read. Then, in a precalculation step S31, area vertices are transformed into the same normalized space as the FDP coordinates. Then, the method continues to step S32 where new positions are calculated such that each object is assigned a position which falls within the boundaries defined by the vertices. After the calculation of new positions by moving each existent position along the way from the center of the respective area as performed in step S32 the method of figure 5 proceeds to step S33 where it ends.

With respect to figure 6, the area division carried out in accordance with step S6 of figure 3 will be described with more detail. The task performed in the area division may be described as follows: Considering one level of the collection hierarchy in the repository, there are N points $p_i$ of known weight $w_i$ representing the objects on this level in the current collection. As mentioned with respect to figure 4, the objects may be collections, subcollections, information elements or documents. These points $p_i$ are placed within a given polygonal area A which is read in step S40. The polygonal area A represents the area of the collection. The task performed in steps S41 and S42 is to find a partition of area A into N subareas $A_i$ which satisfies the following condition:

$p_i \in A_i$
$A_i$ being convex

$A_i \sim W_i$, and

$A_i$ having a size not smaller than a preset minimum value.

With respect to the example used with reference to figure 3, in figure 5, steps S41 and S42 would be for the calculation of a partition of the area of the collection into the first area for the first collection at the second area for the second collection period. In step S11 of figure 3, steps S41 and S42 would be for the calculation of partitions of the first and the second areas of the first and second subcollections in respective areas corresponding to the information elements respectively comprised in the first and second subcollections.

The determination of area subdivisions may be accomplished by using e.g. an additively weighted power Voronoi diagram. The additively weighted Voronoi diagram is known for example from Ukabi, A. Boots, B. Sugihara K., and Chew S.N.(2000) *Spatial Tessellations:*

*Concepts and Applications of Voronoi diagrams.* Wiley, Second Edition. According to the Voronoi diagram, an area of each polygon assigned to each object is related to the weight of the respective object. For example, an object $p_0$ with a weight of 20 is allocated a larger area than an object $p_2$ with a weight of 15, and they are both assigned an area larger than an area of an object $p_1$ having a weight of 10.

For two points p and $p_i$, the additively weighted power distance is given by:

$$d_{pw}(p,p_i;w_i) = \|\vec{p}-\vec{p}_i\|^2 - w_i. \qquad \text{(equation A)}$$

This equation may used for determining a position of a bisector b (p, $p_i$) perpendicular to the interconnecting line between p and $p_i$, the bisector forming an edge of the polygon around p.

However, the additively weighted power distance calculated in accordance with the above equation has the disadvantage that if the weight difference between two objects is very large and these objects are close to each other, the object having smaller weight may be placed on the wrong site of the bisector and hence outside its own area. Thus, in order to ensure that each objects $p_i$ lies within its own area $A_i$, according to the present invention, each $w_i$ is scaled with a global factor f such that all bisectors b ($p_i$, $p_j$) are placed between $p_i$ and $p_j$:

$$d_{pw}(p,p_i;w_i) = \|\vec{p}-\vec{p}_i\|^2 - fw_i. \qquad \text{(equation B)}$$

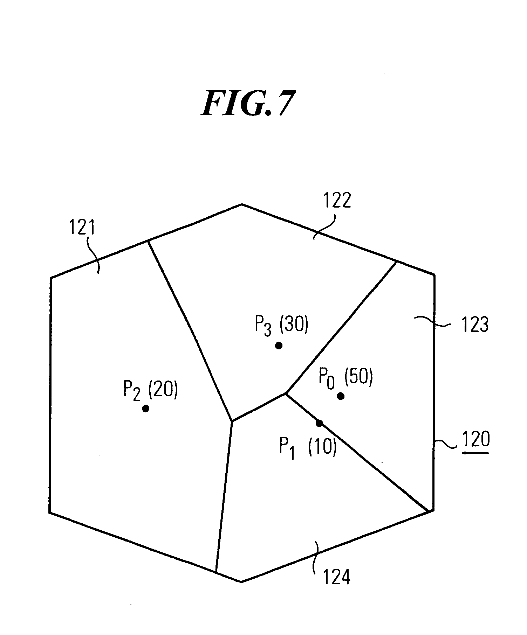

Instead of equation B, a number of other distance equations may be used, such as the multiplicatively weighted Voronoi distance, or the additively weighted Voronoi distance. Advantageously, equation B leads to polygons with straight boundaries which are easy to display. The factor f of the above equation is defined as maximum scale factor which can be uniformly applied to all weights without causing a bisector to overrun. The factor f is calculated in accordance with the above modified equation in step S41. However, since the outer polygon boundaries are fixed and only the inner boundaries (bisectors) can slide, the introduction of the scale factor f may cause that an area $A_i$ is no longer exactly related to its weight $w_i$ corresponding to the total number of information elements within this area. This may occur when relatively light objects are placed close to the margin of the polygon or are placed in between a number of other objects. Such a case is shown in figure 7.

In figure 7, there is shown a collection having an area 120 which defines outer boundaries of the area of the collection. The area 120 has a form of a polygon. Within the boundaries of area 120, there is a subcollection 121 having a centroid $p_2$. The centroid $p_2$ is the geometrical point of gravity of the subcollection 121. The subcollection 121 has a weight of 20 and thus should have an area within the area of the collection 120 corresponding to the weight of 20. Reference number 122 designates a collection within the area of the collection 120. The centroid, i.e. the graphical center of gravity of the collection 122 is $p_3$. The weight of the collection 122 is 30. Thus, an area corresponding to 30 should be assigned to the collection 122. Reference number 123 designates a further subcollection having a weight of 50 and having the centroid $p_0$. Reference number 124 designates a further subcollection having a weight of 10. By following the above known equation (equation (A)), as can be clearly seen from figure 7, the area of the subcollection 124 has approximately the same size as the area of the subcollection of the area 123. However, according to the weight of the subcollection 124 and the subcollection 123, the area of the subcollection 124 should only be one fifth of the area of the subcollection 123.

In addition to that, as can be clearly from figure 7, the centroid $p_1$ is located on the bisector b ($p_0$, $p_1$) which forms the boundary between the subcollection 124 and the subcollection 123. According to one aspect of the present invention, by using the scale factor f (equation B), it is avoided that a centroid is located to close to the bisector or on the bisector as shown in figure 7.

Advantageously, by step S22 of figure 4 centroids having a smaller weight are places close to the center of the surrounding boundary polygon. Objects having a higher weight are placed in a ring midway between the center of the polygon and its boundary.

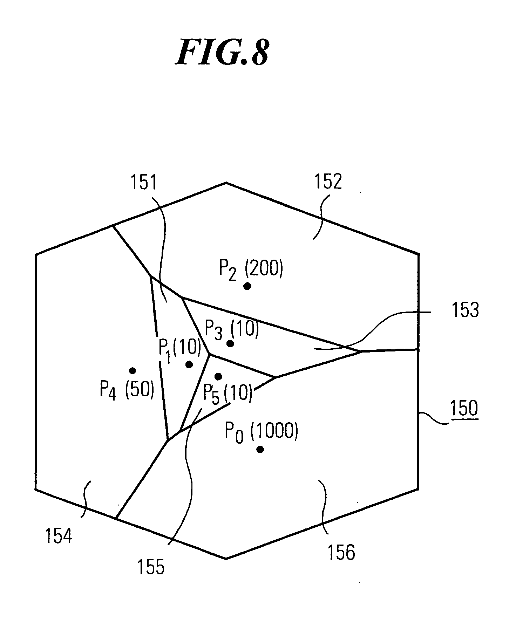

Figure 8 shows the result of placing objects with a smaller weight close to the center of the surrounding boundary polygon while putting heavier objects in a ring midway between the center of the boundary polygon and the center and the use of equation B. In figure 8, in the polygon of the area of the collection 150, there is a subcollection 151 with a centroid $p_1$ having a weight of 10, a subcollection 152 having a weight of 200 and a centroid $p_2$, a subcollection 153 having a weight of 10 and a centroid $p_3$, a subcollection 154 having a weight of 50 and a centroid $p_4$, a subcollection 155 having a weight of 10 and a centroid $p_5$, and a subcollection 156 having a weight of 1000 and a centroid $p_0$.

As can be clearly taken from figure 8, subcollections 156, 152 and 154 having a higher weight are place close to the boundaries of the collection 150. In contrast, the subcollections 151, 153 and 155 having a significant lighter weight are place close to the center of the area of the collection 150. In addition to that, a relation of the size of the respective subcollection and the weight is kept. As can be taken from figure 8, the area of the subcollection 156 is bigger and is significantly bigger than for example the area of the subcollection 155. Furthermore, advantageously, the centroid of the respective subcollection 151 to 156 are always within the boundaries of the respective areas and there is a sufficient distance between the respective centroid and its boundary.

After the calculation step S42, the method of figure 6 proceeds to step S43 and ends.

Figure 9 shows an image or layout as displayed on the display 1 of figure 1 according to the present invention. As can be taken from figure 9, the objects, documents or information elements are displayed in the form of a 'galaxy". Single objects are visualized as stars with similar objects forming clusters of stars. Collection or subcollections are visualized as polygons bounding clusters and stars, resembling the boundaries of constellations in the night skies. Collections featuring similar content are placed close to each other as far as the hierarchical structure of the repository allows. Empty areas remain where objects are hidden e.g. due to access restrictions for a particular user and resemble dark nebulas as found quite frequently within real galaxies. As can be seen in the upper left corner of figure 9, there is provided an overview over the whole night sky. In the main polygon shown in figure 9 which has approximately the form of a circle, there are collections and subcollections relating to 'Bayern", 'Berlin", 'Hessen", 'Brandenburg", 'Nordrhein-Westfalen", 'Neue Bundesländer" and 'Thüringen". The image shown in figure 9 was derived from a collection of approximately 100,000 articles in the German language which were published during the years 1997 to 2000 in the Süddeutsche Zeitung, which is a German daily newspaper. These articles have been classified thematically by the newspaper editorial staff into around 9,000 collections and subcollections up to 15 levels deep. In figure 9, the constellation boundaries and labels are shown for the topmost level of the hierarchy.

As obvious from figure 9, approximately 50 % of the articles relate to 'Bayern" which is the state of Germany where the Süddeutsche Zeitung is published. The amount of articles relating to other states of Germany is significantly lesser. The galaxy itself is complete in the sense that it displays all the stars, i.e. objects or information elements it contains, down to the bottommost level of the hierarchy. However, as obvious in figure 9, no individual stars are discernable in the figures. The clusters forming the galaxy consist of thousands of stars which, in accordance with a telescope metaphor, can only be resolved individually at a higher magnification.

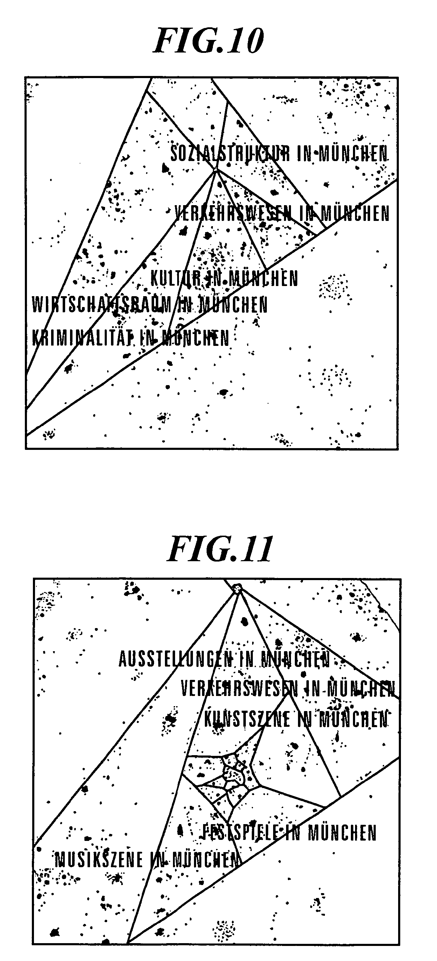

In the following, the telescope metaphor will be described with more detail. In case a user is interested in further information on a specific cluster of stars, for example if the user points his telescope to the bright cluster of stars just underneath the 'Bayern". Then, with an increased magnification, the user sees this cluster in more detail as shown in figure 10.

As can be taken from figure 10, this very bright cluster relates to the city of Munich which is the city where the Süddeutsche Zeitung is published. Within this cluster, with the increased magnification, further collections and subcollections are now visible. For example, within 'München', there are visible subcollections or collections relating to 'Wirtschaftsraum München" which can be translated as 'the economic area of Munich', 'Kriminalität in München" which can be translated into 'criminality in Munich", 'Kultur in München' which can be translated into 'culture in Munich', 'Verkehrswesen in München' which can be translated into 'traffic in Munich' and 'Sozialstruktur in München' which can be translated into 'social structure in Munich".

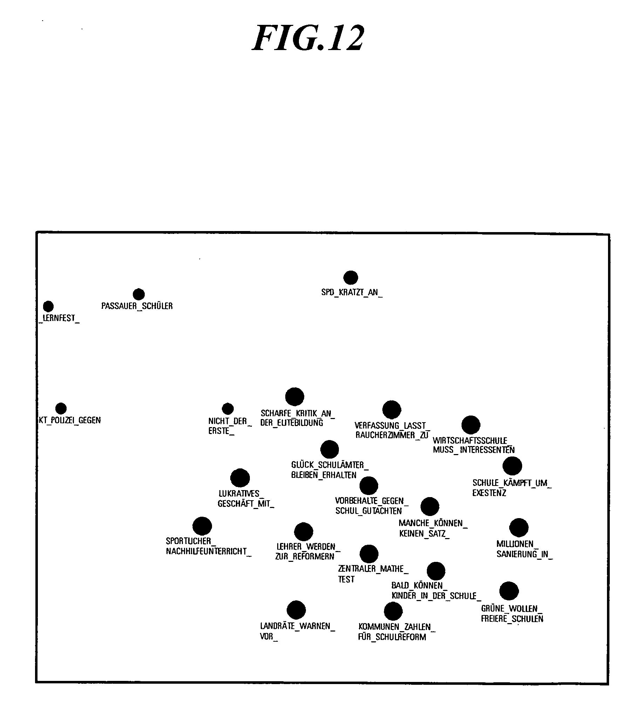

If the user pinpoints his telescope to the cluster 'Kultur in München', the user may see an image such as the one in figure 11. In figure 11, there are big subcollections relating to 'Ausstellungen in München' which may be translated into 'exhibitions in Munich', 'Festspiele in München' which can be translated into 'Festivals in Munich', 'Kunstszene in München' which can be translated into 'Art in Munich' and 'Musicszene in München' which can be translated into 'the music scene of Munich'. As can further be seen from figure 11, the subcollections having a smaller weight are arranged in the center of these polygons and are not explicitly discernable with this magnification. In case the user is interested in the subcollections in the center of figure 11, the user has to pinpoint the telescope on this area. The zooming performed by the metaphoric telescope is performed by a zooming option on the display one of figure 1 which may be activated by use of a zooming button which can be activated by the user by means of a cursor device.

Figure 12 shows an image where the user has selected a very high resolution which shows the individual information elements or documents which are labeled by the respective meta information comprising for example author, publication date and title.

With exemplary embodiments of the present invention, it is possible to visualize very large (millions of entities), hierarchically structured document repositories (scalability). Furthermore, advantageously, both, the hierarchical organization of the documents and the inter-document similarity may be presented within a single, consistent visualization (hierarchy plus similarity). In addition to that, both a global and a local view of the information space are integrated into one seamless visualization (focus plus context). Also, advantageously, with e.g. the 'telescope', simple, intuitive navigation, exploration, and manipulation facilities are provided (interaction). In addition to that, with the exemplary embodiments of the present invention it is possible to support a single, consistent view of the document space for all users, regardless of the access rights of each individual user, thus providing a common frame of reference for all parties (united view)

The design of the visualization metaphor in accordance with exemplary embodiments of the present invention, advantageously may allow the visualization to display a maximum number of document properties and relationships without requiring the user to take action. E.g. it is possible to show an age of documents with different colors or different shapes in the visualization. Thus, advantageously, exemplary embodiments of the present invention may allow a location of documents without specifying a query, by simply browsing the information space. Furthermore, the exemplary embodiments of the present invention may feature a number of additional information channels to which users may map document properties of their choice, again replacing explicit queries with navigation.

As a paramount advantage, exemplary embodiments of the present invention may facilitate memorability, in the sense of enabling users to visually recall locations within the information space, without having to remember long document names or lengthy path information. Advantageously, according to exemplary embodiments of the present invention, the visualization remains basically unchanged at a global level even if changes occur to the underlying document repository on a local level. Also, according to exemplary embodiments of the present invention it is possible to present the same visualization to different users in collaborative work environments, where each user might have different access rights. If every user were presented with a different visualization of the same information space, communication between users could not be based on the same frame of reference, strongly reducing its practical usability.

## Claims

1. A method for displaying information comprising a plurality of information elements on a display (1), the information being organized in a collection (2) comprising a first subcollection (3) and a second subcollection (4, 5), the first subcollection (3) comprising a first number of information elements of the plurality of information elements and the second subcollection comprising a second number of information elements of the plurality of information elements; the method comprising:

   (a) determining a first similarity between the first subcollection and the second subcollection (S 4, S 21);
   (b) determining first coordinates for the first subcollection and the second subcollection in accordance with the first similarity (S 22);
   (c) allocating a first area having first boundaries to the collection such that a first size of the first area is related to a number of information elements of the information (S 6);
   (d) allocating a second area having second boundaries to the first subcollection such that a second size of the second area is related to the first number (S 6);
   (e) allocating a third area to the second subcollection such that a third size of the third area is related to the second number (S 6);
   (f) positioning the second and third areas within the first boundaries of the first area in accordance with the first coordinates (S 4, S 5);
   (g) determining a second similarity between a first information element of the first number of information elements and a second information element of the first number of information elements (S 10, S 21);
   (h) positioning the first information element and the second information element within the second boundaries in accordance with the second similarity (S 11, S 5).

2. A method according to claim 1, wherein step (a) further comprises:

   calculating a first centroid for the first subcollection and calculating a second centroid for the second subcollection (S 4);
   determining the first similarity between the first subcollection and the second subcollection by calculating a third similarity between the first centroid and the second centroid (S 4, S 21).

3. Method according to claim 2, wherein the third similarity is calculated in accordance with the following equation:

$$sim(D_i, D_j) = \frac{\sum_{k=1}^{L}(x_{i,k}x_{j,k})}{\sqrt{\sum_{k=1}^{L}x_{i,k}^2 \sum_{k=1}^{L}x_{j,k}^2}}$$

with sim($D_i$, $D_j$) being the third similarity, $D_i$ being the first centroid and $D_j$ being the second centroid, L being a dimensionality and $x_{i,q}$ being a q'th component of a term vector representing the first centroid (S 4, S 21).

4. A method according to claim 2 or 3, wherein step (b) further comprises calculating the first coordinates on the display for the first and second centroids by using a first force between the first and second centroids (S 22).

5. A method according to claim 4, wherein step (b) further comprises generating second coordinates on the display for the first and second centroids at random (S 22);

determining a second force which is attractive and which is proportional to the third similarity (S 22);
determining a third force which is inversely proportional to a first distance between the first and second centroids on the basis of the second coordinates (S 22);
determining a fourth gravitational force (S 22);

wherein the first force comprises the second, third and fourth forces.

6. A method according to claim 4 or 5, wherein the first force is calculated in accordance with the following equation:

$$force(D_i, D_j) = sim(D_i, D_j)^d - \frac{w}{dist(D_i, D_j)} + grav$$

wherein force($D_i$, $D_j$) is the first force, sim($D_i$, $D_j$)$^d$ is the second force, $\frac{w}{dist(D_i, D_j)}$ is the third force with w being proportional to at least one element of the group consisting of the first and second number, dist($D_i$, $D_j$) is the first distance and grav is the fourth force and
wherein $D_i$ is the first centroid and $D_j$ is the second centroid and d is a discriminator, with d>=1 (S 22).

7. A method according to one of claims 1 to 6, wherein the first coordinates are determined in accordance with the following equation:

$$D_i.x = \frac{1}{N-1}\sum_{j=1,j\neq i}^{N} force(D_i, D_j) * D_j.x + (1 - force(D_i, D_j)) * D_i.x$$

wherein $D_i.x$ is an x-coordinate of the first coordinates, force($D_i$, $D_j$) is the first force, wherein N is a total amount of information elements of the information (S 22, S 4).

8. A method according to claim 2, wherein the first centroid is given a first weight and the second centroid is given a second weight, wherein the first weight corresponds to the first number and the second weight corresponds to the second number (S 4).

9. A method according to one of claims 2 or 8, wherein the second boundary is located between the second area and the third area and is determined by a perpendicular bisector $b(p,p_i)$ which is perpendicular to a straight line ($\overline{pp_i}$) between the first centroid and the second centroid, with $p$ being first coordinates of the first centroid, $p_i$ being second coordinates of the second centroid (S 6).

10. A method according to claim 9, wherein a second distance between the first centroid and a point of intersection of the perpendicular bisector $b(p, p_i)$ and the straight line $(\overline{pp_i})$ is calculated by means of the following equation:

$$d_{pw}(p,p_i;w_i)=\|\vec{p}-\vec{p_i}\|^2 - fw_i;$$

with $d_{pw}(p,p_i;w_i)$ being the second distance which is additively weighted, with $p$ being the first coordinates of the first centroid, $p_i$ being the second coordinates of the second centroid and $w_i$ being the second weight and $f$ being a scale factor (S 6).

11. A method according to claim 10, wherein the scale factor $f$ is a global scale factor to ensure that the perpendicular bisector $b(p,p_i)$ is between the first centroid and the second centroid (S 41).

12. A method according to claims 2 and 8, wherein step (f) further comprises:

determining a center of the first area;
determining which weight of the first and second weights is a smaller weight; and
arranging a centroid of the first and second centroids having the smaller weight closer to the center than the remaining centroid of the first and second centroids (S 4, S 22).

13. Method according to claim 1, wherein the second similarity is calculated in accordance with the following equation:

$$sim(E_u, E_v) = \frac{\sum_{l=1}^{L}(y_{u,l}y_{v,l})}{\sqrt{\sum_{l=1}^{L}y_{u,l}^2 \sum_{l=1}^{L}y_{v,l}^2}}$$

with $sim(E_u, E_v)$ being the second similarity, $E_u$ being the first information element and $E_v$ being the second information element, L being a dimensionality and $y_{u,q}$ being a q'th component of a term vector representing the first information element (S 10, S 21).

14. A method according to one of claims 1 to 13, wherein step (g) further comprises calculating the third coordinates on the display for the first and second information elements by using a fifth force between the first and second information elements (S 10).

15. A method according to claim 14, wherein step (g) further comprises

generating fourth coordinates on the display for the first and second information elements at random (S 11);
determining a sixth force which is attractive and which is proportional to the second similarity (S 11);
determining a seventh force which is inversely proportional to a third distance between the first and second information elements on the basis of the fourth coordinates (S 11); determining an eighth gravitational force (S 11);

wherein the fifth force comprises the sixth, seventh and eights forces.

16. A method according to claim 14 or 15, wherein the fifth force is calculated in accordance with the following equation:

$$force(E_u,E_v) = sim(E_u,E_v))^e - \frac{1}{dist(E_u,E_v)} + grav$$

wherein $force(E_u, E_v)$ is the fifth force, $sim(E_u, E_v)^e$ is the sixth force, $\frac{1}{dist(E_u,E_v)}$ is the seventh force, $dist(E_u, E_v)$ is the third distance and grav is the eight force and wherein $E_u$ is the first information element and $E_v$ is the second information element and e is a discriminator, with e>=1 (S 11).

**17.** A method according to one of claims 15 or 16, wherein the fourth coordinates are determined in accordance with the following equation:

$$E_u.x = \frac{1}{N-1} \sum_{v=1, v \neq u}^{N} force(E_u, E_v) * E_v.x + (1 - force(E_u, E_v)) * E_v.x$$

wherein $E_{u.x}$ is an x-coordinate of the fourth coordinates, $force(E_u, E_v)$ is the fifth force (S 11).

**18.** A method according to one of the preceding claims, further comprising the step of:

displaying the first, second and third areas and the first number of information elements and the second number of information elements, wherein each information element of the first and second number of information elements is represented as a graphic sign such that an image displayed on the display resembles an area of a night sky as seen trough a telescope or as seen by a naked eye.

**19.** A method according to one of claims 2 to 18, wherein the first and second centroids are respective geometrical centers of gravity of the second and third areas (S 4).

**20.** A method according to claim 18, wherein the graphic sign is one of a shape or pixel on the display, wherein properties of the shape or pixel express properties of the respective information elements of the plurality of information elements.

**21.** A method according to one of claims 1 to 20, wherein the first, second and third areas are polygons.

**22.** A method according to one of claims 1 to 21, wherein the information elements are selected from a group consisting at least of documents, subcollections and collections.

**23.** A data processing system for displaying information, comprising a display (1), and an operating system (13), wherein the information comprises a plurality of information elements, wherein the information is organized in a collection (2) comprising a first subcollection (3) and a second subcollection (4, 5), the first subcollection (3) comprising a first number of information elements of the plurality of information elements and the second subcollection (4, 5) comprising a second number of information elements of the plurality of information elements, the data processing system comprising:

(a) means for determining a first similarity between the first subcollection and the second subcollection (15);
(b) means for determining first coordinates for the first subcollection and the second subcollection (19) in accordance with the first similarity;
(c) means for allocating a first area having first boundaries to the collection (28) such that a first size of the first area is related to a number of information elements of the information;
(d) means for allocating a second area having second boundaries to the first subcollection (27) such that a second size of the second area is related to the first number;
(e) means for allocating a third area to the second subcollection (26) such that a third size of the third area is related to the second number;
(f) means for positioning the second and third areas within the first boundaries of the first area in accordance with the first coordinates (35);
(g) means for determining a second similarity between a first information element of the first number of information elements and a second information element of the first number of information elements (29);
(h) means for positioning the first information element and the second information element (24) within the second boundaries in accordance with the second similarity.

**24.** A data processing system according to claim 23, wherein the means for determining the first similarity between the first subcollection and the second subcollection (15) further comprises

means for calculating a first centroid for the first subcollection and calculating a second centroid for the second subcollection (16); and
means for determining the first similarity between the first subcollection and the second subcollection by calculating a third similarity (17) between the first centroid and the second centroid.

**25.** A data processing system according to claim 24, wherein the third similarity is calculated in accordance with the following equation:

$$sim(D_i, D_j) = \frac{\sum_{k=1}^{L}(x_{i,k} x_{j,k})}{\sqrt{\sum_{k=1}^{L} x_{i,k}^2 \sum_{k=1}^{L} x_{j,k}^2}}$$

with $sim(D_i, D_j)$ being the third similarity, $D_i$ being the first centroid and $D_j$ being the second centroid, L being a dimensionality and $x_{i,q}$ being a q'th component of a term vector representing the first centroid (S 4, S 21).

**26.** A data processing system according to claim 24 or 25, further comprising means for calculating the first coordinates on the display for the first and second centroids by using a first force between the first and second centroids (18).

**27.** A data processing system according to claim 26, wherein the means for determining the first coordinates for the first subcollection and the second subcollection (19) further comprises

means for generating second coordinates on the display for the first and second centroids at random (23);
means for determining a second force (22) which is attractive and which is proportional to the third similarity;
means for determining a third force (21) which is inversely proportional to a first distance between the first and second centroids on the basis of the second coordinates; and
means for determining a fourth gravitational force (20); and

wherein the first force comprises the second, third and fourth forces.

**28.** A data processing system according to claim 26 or 27, wherein the first force is calculated in accordance with the following equation:

$$force(D_i, D_j) = sim(D_i, D_j)^d - \frac{w}{dist(D_i, D_j)} + grav$$

wherein $force(D_i, D_j)$ is the first force, $sim(D_i, D_j)^d$ is the second force, $\frac{w}{dist(D_i, D_j)}$ is the third force with w being proportional to at least one element of the group consisting of the first and second number, $dist(D_i, D_j)$ is the first distance and grav is the fourth force and
wherein $D_i$ is the first centroid and $D_j$ is the second centroid and d is a discriminator, with d>=1 (S 22).

**29.** A data processing system according to one of claims 23 to 28, wherein the first coordinates are determined in accordance with the following equation:

$$D_i.x = \frac{1}{N-1} \sum_{j=1, j \neq i}^{N} force(D_i, D_j) * D_j.x + (1 - force(D_i, D_j)) * D_i.x$$

wherein $D_i.x$ is an x-coordinate of the first coordinates, $force(D_i, D_j)$ is the first force, wherein N is a total amount of information elements of the information (S 22, S 4).

**30.** A data processing system according to claim 24, wherein the first centroid is given a first weight and the second centroid is given a second weight, wherein the first weight corresponds to the first number and the second weight corresponds to the second number.

**31.** A data processing system according to one of claims 24 or 30, wherein the second boundary is located between the second area and the third area and is determined by a perpendicular bisector $b(p,p_i)$ which is perpendicular to a straight line ($\overline{pp_i}$) between the first centroid and the second centroid, with $p$ being first coordinates of the first centroid, $p_i$ being second coordinates of the second centroid.

**32.** A data processing system according to claim 31, wherein a second distance between the first centroid and a point of intersection of the perpendicular bisector $b(p,p_i)$ and the straight line ($\overline{pp_i}$) is calculated by means of the following equation:

$$d_{pw}(p,p_i;w_i) = \left\| \vec{p} - \vec{p_i} \right\|^2 - fw_i;$$

with $d_{pw}(p,p_i;w_i)$ being the second distance which is additively weighted, with $p$ being the first coordinates of the first centroid, $p_i$ being the second coordinates of the second centroid and $w_i$ being the second weight and $f$ being a scale factor.

**33.** A data processing system according to claim 32, wherein the scale factor $f$ is a global scale factor to ensure that the perpendicular bisector $b(p,p_i)$ is between the first centroid and the second centroid.

**34.** A data processing system according to claims 24 and 32, wherein the means for positioning the second and third areas within the first boundaries of the first area (35) in accordance with the first coordinates further comprises

means for determining a center (38) of the first area;
means for determining which weight of the first and second weights is a smaller weight (37); and
means for arranging a centroid of the first and second centroids having the smaller weight closer to the center than the remaining centroid of the first and second centroids (36).

**35.** A data processing system according to claim 23, wherein the second similarity is calculated in accordance with the following equation:

$$sim(E_u, E_v) = \frac{\sum_{l=1}^{L} (y_{u,l} y_{v,l})}{\sqrt{\sum_{l=1}^{L} y_{u,l}^2 \sum_{l=1}^{L} y_{v,l}^2}}$$

with $sim(E_u, E_v)$ being the second similarity, $E_u$ being the first information element and $E_v$ being the second information element, L being a dimensionality and $y_{u,q}$ being a q'th component of a term vector representing the first information element (S 10, S 21).

**36.** A data processing system according to one of claims 23 to 35, wherein the means for calculating a second similarity (29) between a first information element of the first number of information elements and a second information element of the first number of information elements further comprises

means for calculating the third coordinates (30) on the display for the first and second information elements by using a fifth force between the first and second information elements.

**37.** A data processing system according to claim 36, wherein the means for calculating the second similarity (29) between the first information element of the first number of information elements and the second information element of the first number of information elements further comprises

means for generating fourth coordinates (31) on the display for the first and second information elements at random;
means for determining a sixth force (32) which is attractive and which is proportional to the second similarity;
means determining a seventh force (33) which is inversely proportional to a third distance between the first and second information elements on the basis of the fourth coordinates; and

means for determining an eighth gravitational force (34); and

wherein the fifth force comprises the sixth, seventh and eights forces.

**38.** A data processing system according to claim 36 or 37, wherein the fifth force is calculated in accordance with the following equation:

$$E_u.x = \frac{1}{N-1} \sum_{v=1,v\neq u}^{N} force(E_u, E_v) * E_v.x + (1 - force(E_u, E_v)) * E_v.x$$

wherein $E_{u.x}$ is an x-coordinate of the fourth coordinates, force($E_u$, $E_v$) is the fifth force (S 11).

**39.** A data processing system according to one of claims 37 or 38, wherein the fourth coordinates are determined in accordance with the following equation:

$$ty=ty + force(E_u,E_v)*E_u.y+(1-force(E_u,E_v))*E_u.y$$

wherein $E_{u.y}$ is an x-coordinate of the fourth coordinates, force($E_u$, $E_v$) is the fifth force and $E_u$'s new x-coordinate is $E_u.Y = ty / T$, with T being a dimensionality.

**40.** A data processing system according to one of claims 23 to 39, further comprising means for controlling the display (25) for displaying the information such that an image displayed on the display (1) resembles an area of a night sky as seen trough a telescope or as seen by a naked eye, wherein each information element of the first and second number of information elements is represented as a graphic sign.

**41.** A data processing system according to one of claims 24 to 40, wherein the first and second centroids are respective geometrical centers of gravity of the second and third areas.

**42.** A data processing system according to one of claims 23 to 41, wherein the information elements are selected from a group consisting at least of documents, subcollections and collections.

**43.** A data processing system according to one of claims 23 to 42, wherein the data processing system is a client-server system (51, 52, 53, 54, 55, 56, 57, 58).

**44.** A computer program product stored on a computer usable medium, comprising:

(a) computer readable program means for causing a computer to display information on a display, the information being organized in a collection comprising a first subcollection and a second subcollection, the first subcollection comprising a first number of information elements of the plurality of information elements and the second subcollection comprising a second number of information elements of the plurality of information elements

(b) computer readable program means for causing the computer to determine a first similarity between the first subcollection and the second subcollection;

(c) computer readable program means for causing the computer to determine first coordinates for the first subcollection and the second subcollection on the basis of the first similarity;

(d) computer readable program means for causing the computer to allocate a first area having first boundaries to the collection such that a first size of the first area is related to a number of information elements of the information;

(e) computer readable program means for causing the computer to allocate a second area having second boundaries to the first subcollection such that a second size of the second area is related to the first number;

(f) computer readable program means for causing the computer to allocate a third area to the second subcollection such that a third size of the third area is related to the second number;

(g) computer readable program means for causing the computer to position the second and third areas within the first boundaries of the first area on the basis of the first coordinates;

(h) computer readable program means for causing the computer to calculate a second similarity between a first information element of the first number of information elements and a second information element of the first number of information elements;

(i) computer readable program means for causing the computer to position the first information element and the second information element within the second boundaries in accordance with the second similarity.

**45.** A computer program product directly loadable into an internal memory of a digital computer, comprising software code portions for performing the steps of one of claims 1 to 22 when the product is run on the computer.

# FIG.1

EP 1 351 160 A1

# FIG.2

100

ARGUMENT COLLECTION

BEGIN GEOMETRY GENERATION — S1

KNOWLEDGE REPOSITORY
101

GATHER CHILD COLLECTIONS OF COLLECTION — S2

**FIG.3**

S3
CHILD COLLECTIONS PRESENT ?

YES

NO

S9 — GATHER INFORMATION ELEMENTS OF COLLECTION

KNOWLEDGE REPOSITORY
101

S4 — DO FDP FOR CENTROIDS OF CHILD COLLECTIONS

S10 — DO FDP FOR GATHERED INFORMATION ELEMENTS

S5 — DO GEOMAP FOR CENTROIDS O OF CHILD COLLECTIONS

S11 — DO GEOMAP FOR INFORMATION ELEMENTS

S6 — DO AREA DIVISION FOR COLLECTION AND CENTROIDS OF CHILD COLLECTIONS

S7

S12 — SAVE INFORMATION ELEMENT GEOMETRY

GEOMETRY DATABASE
102

SAVE CHILD COLLECTION GEOMETRY

S8 — CALL GEOMETRY GENERATION FOR CHILD COLLECTIONS

S13 — END GEOMETRY GENERATION

# *FIG.4*

```
┌──────────────────┐        ╭───────────────╮
│   ARGUMENT       │───────▶│   BEGIN FDP   │──── S20
│ LIST OF OBJECTS  │        ╰───────────────╯
└──────────────────┘                │
                                    ▼
                        ┌───────────────────┐
                        │   PRECALCULATE    │
                        │     VALUES        │──── S21
                        │   (SIMILARITY     │
                        │   MATRIX etc.)    │
                        └───────────────────┘
                                    │
                                    ▼
                        ┌───────────────────┐
                        │    DO FORCE-      │
                        │    DIRECTED       │
                        │  PLACEMENT OF     │──── S22
                        │   ALL OBJECTS     │
                        └───────────────────┘
                                    │
                                    ▼
                        ┌───────────────────┐
                        │    NORMALIZE      │
                        │   COORDINATES     │──── S23
                        │   OF OBJECTS      │
                        └───────────────────┘
                                    │
                                    ▼
                        ╭───────────────────╮
                        │     END FDP       │──── S24
                        ╰───────────────────╯
```

EP 1 351 160 A1

# *FIG.5*

# *FIG.6*

```
┌──────────────────┐          ╭────────────────────╮
│   ARGUMENT       │─────────▶│      BEGIN          │──S40
│ LIST OF OBJECTS  │          │ AREA SUBDIVISION    │
└──────────────────┘          ╰────────────────────╯
                                        │
                                        ▼
┌──────────────────┐          ┌────────────────────┐
│                  │          │ PRECALCULATION:     │
│   ARGUMENT       │─────────▶│ CALCULATE FACTOR F  │──S41
│     AREA         │          │ DETERMINING SCALE   │
│                  │          │ OF WEIGHTS TO       │
└──────────────────┘          │ AVOID ZERO AREAS    │
                              └────────────────────┘
                                        │
                                        ▼
                              ┌────────────────────┐
                              │ CALCULATE ADDITI-   │
                              │ VELY WEIGHTED       │
                              │ POWER DIAGRAM       │──S42
                              │ AND ASSIGN          │
                              │ RESULT ARE TO       │
                              │ EACH OBJECT         │
                              └────────────────────┘
                                        │
                                        ▼
                              ╭────────────────────╮
                              │      END            │──S43
                              │ AREA SUBDIVISION    │
                              ╰────────────────────╯
```

# FIG.7

# FIG.8

EP 1 351 160 A1

# *FIG.9*

26

# *FIG.10*

# *FIG.11*

# FIG.12

**EP 1 351 160 A1**

European Patent Office

**EUROPEAN SEARCH REPORT**

Application Number

EP 02 00 7742

## DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| X | CHEN H ET AL: "INTERNET CATEGORIZATION AND SEARCH: A SELF-ORGANIZING APPROACH" JOURNAL OF VISUAL COMMUNICATION AND IMAGE REPRESENTATION, ACADEMIC PRESS, INC, US, vol. 7, no. 1, 1 March 1996 (1996-03-01), pages 88-102, XP000619822 ISSN: 1047-3203 * page 93, left-hand column, paragraph 2 - page 95, left-hand column, paragraph 5; figures 1-3 * | 1,2,8, 12, 18-24, 34,40-45 | G06F17/30 |
| X | MIN SONG: "BiblioMapper: a cluster-based information visualization technique" INFORMATION VISUALIZATION, 1998. PROCEEDINGS. IEEE SYMPOSIUM ON RESEARCH TRIANGLE, CA, USA 19-20 OCT. 1998, LOS ALMAITOS, CA, USA,IEEE COMPUT. SOC, US, 19 October 1998 (1998-10-19), pages 130-136, XP010313309 ISBN: 0-8186-9093-3 | 1-3,8, 12,13, 18-20, 22-25, 35,40-45 | |
| Y | * the whole document * | 4-7, 9-11, 14-17, 21, 26-34, 36-39 | TECHNICAL FIELDS SEARCHED (Int.Cl.7) G06F |

-/--

The present search report has been drawn up for all claims

| Place of search | Date of completion of the search | Examiner |
|---|---|---|
| THE HAGUE | 2 July 2003 | I. SZÁNTÓ |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**European Patent Office**

**EUROPEAN SEARCH REPORT**

Application Number

EP 02 00 7742

## DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| Y | CHALMERS M ET AL: "Bead: explorations in information visualization" 15TH INTERNATIONAL ACM/SIGIR CONFERENCE ON RESEARCH AND DEVELOPMENT IN INFORMATION RETRIEVAL, COPENHAGEN, DENMARK, 21-24 JUNE 1992, vol. spec. issue., pages 330-337, XP002246201 SIGIR Forum, 1992, USA ISSN: 0163-5840 * page 330, right-hand column - page 333, right-hand column * | 4-7, 9-11, 14-17, 21, 26-34, 36-39 | |
| A | SKUPIN A: "A cartographic approach to visualizing conference abstracts" IEEE COMPUTER GRAPHICS AND APPLICATIONS, JAN.-FEB. 2002, IEEE, USA, 'Online! vol. 22, no. 1, pages 50-58, XP002233434 ISSN: 0272-1716 Retrieved from the Internet: \<URL:http://ieeexplore.ieee.org:80/iel5/38 /21006/00974518.pdf> 'retrieved on 2003-02-21! * the whole document * | 1-45 | TECHNICAL FIELDS SEARCHED (Int.Cl.7) |

-/--

The present search report has been drawn up for all claims

| Place of search | Date of completion of the search | Examiner |
|---|---|---|
| THE HAGUE | 2 July 2003 | I. SZÁNTÓ |

**European Patent Office**

**EUROPEAN SEARCH REPORT**

Application Number

EP 02 00 7742

## DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| A | RENNISON E: "Galaxy of News. An approach to visualizing and understanding expansive news landscapes" UIST '94. SEVENTH ANNUAL SYMPOSIUM ON USER INTERFACE SOFTWARE AND TECHNOLOGY. PROCEEDINGS OF THE ACM SYMPOSIUM ON USER INTERFACE SOFTWARE AND TECHNOLOGY, PROCEEDINGS OF UIST'94. USER INTERFACE SOFTWARE AND TECHNOLOGY, MARINA DEL REY, CA, USA, 2-4 NOV, 'Online! pages 3-12, XP002233435 1994, New York, NY, USA, ACM, USA ISBN: 0-89791-657-3 Retrieved from the Internet: <URL:http://doi.acm.org/10.1145/192426.192429> 'retrieved on 2003-02-21! * page 6, right-hand column, paragraph 2 – page 9, right-hand column, paragraph 11; figure 1 * | 1-45 | |
| D,A | CHALMERS M: "A LINEAR ITERATION TIME LAYOUT ALGORITHM FOR VISUALISING HIGH-DIMENSIONAL DATA" VISUALIZATION '96. PROCEEDINGS OF THE VISUALIZATION CONFERENCE. SAN FRANCISCO, OCT. 27 – NOV. 1, 1996, PROCEEDINGS OF THE VISUALIZATION CONFERENCE, NEW YORK, IEEE/ACM, US, 27 October 1996 (1996-10-27), pages 127-132, XP000704180 ISBN: 0-7803-3673-9 * the whole document * | 1-45 | TECHNICAL FIELDS SEARCHED (Int.Cl.7) |

-/--

The present search report has been drawn up for all claims

| Place of search | Date of completion of the search | Examiner |
|---|---|---|
| THE HAGUE | 2 July 2003 | I. SZÁNTÓ |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**European Patent Office**

**EUROPEAN SEARCH REPORT**

Application Number

EP 02 00 7742

## DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| D,A | OKABE A, BOOTS, B, SUGIHARA K, CHIU S N: "Spatial Tesselations: Concepts and Applications of Voronoi Diagrams" 1999 , JOHN WILEY & SONS, LTD. , CHICHESTER, ENGLAND XP002246203 * page 113 - page 134 * | 9-11, 30-33 | |
| A | TATEMURA J: "Visualizing document space by force-directed dynamic layout" VISUAL LANGUAGES, 1997. PROCEEDINGS. 1997 IEEE SYMPOSIUM ON ISLE OF CAPRI, ITALY 23-26 SEPT. 1997, LOS ALAMITOS, CA, USA,IEEE COMPUT. SOC, US, 23 September 1997 (1997-09-23), pages 119-120, XP010250576 ISBN: 0-8186-8144-6 * the whole document * | 1-45 | |
| A | TIM DWYER: "Three dimensional UML using Force Directed Layout (Thesis)" INTERNET CITATION, 'Online! 19 January 2001 (2001-01-19), pages 1-54, XP002246202 Retrieved from the Internet: <URL:http://www.cs.mu.oz.au/tr_submit/test/tr_db/mu_TR_2001_25-cp.ps.gz> 'retrieved on 2003-06-30! * page 8 - page 20 * | 4-7, 14-17, 26-29, 36-39 | TECHNICAL FIELDS SEARCHED (Int.Cl.7) |

-/--

The present search report has been drawn up for all claims

| Place of search | Date of completion of the search | Examiner |
|---|---|---|
| THE HAGUE | 2 July 2003 | I. SZÁNTÓ |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**European Patent Office**

**EUROPEAN SEARCH REPORT**

Application Number

EP 02 00 7742

## DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| A | KAUFMANN M, WAGNER D (EDS): "Drawing Graphs - Methods and Models" 'Online! 2001 , SPRINGER VERLAG , BERLIN, HEIDELBERG XP002246204 Retrieved from the Internet: <URL: http://link.springer.de/link/service/series/0558/papers/2025/20250071.pdf> 'retrieved on 2003-07-02! * page 71 - page 86 * * page 193 - page 227 * * page 283 - page 306 * ----- | 4-7, 14-17, 26-29, 36-39 | |
| | | | **TECHNICAL FIELDS SEARCHED (Int.Cl.7)** |

The present search report has been drawn up for all claims

| Place of search | Date of completion of the search | Examiner |
|---|---|---|
| THE HAGUE | 2 July 2003 | I. SZÁNTÓ |

European Patent

Office

**Application Number**

EP 02 00 7742

## CLAIMS INCURRING FEES

The present European patent application comprised at the time of filing more than ten claims.

☐ Only part of the claims have been paid within the prescribed time limit. The present European search report has been drawn up for the first ten claims and for those claims for which claims fees have been paid, namely claim(s):

☐ No claims fees have been paid within the prescribed time limit. The present European search report has been drawn up for the first ten claims.

## LACK OF UNITY OF INVENTION

The Search Division considers that the present European patent application does not comply with the requirements of unity of invention and relates to several inventions or groups of inventions, namely:

see sheet B

☒ All further search fees have been paid within the fixed time limit. The present European search report has been drawn up for all claims.

☐ As all searchable claims could be searched without effort justifying an additional fee, the Search Division did not invite payment of any additional fee.

☐ Only part of the further search fees have been paid within the fixed time limit. The present European search report has been drawn up for those parts of the European patent application which relate to the inventions in respect of which search fees have been paid, namely claims:

☐ None of the further search fees have been paid within the fixed time limit. The present European search report has been drawn up for those parts of the European patent application which relate to the invention first mentioned in the claims, namely claims:

| European Patent Office | LACK OF UNITY OF INVENTION SHEET B | Application Number EP 02 00 7742 |
|---|---|---|

The Search Division considers that the present European patent application does not comply with the requirements of unity of invention and relates to several inventions or groups of inventions, namely:

1. Claims: 1, 2, 3, 8, 12, 13, 18 - 25, 34, 35, 40 - 45

   A method and system for displaying the representations of information elements and of classes in a classification hierarchy as points and areas. The information elements and the centroids of the classes are input as multi-dimensional vectors. The method includes steps to calculate the distance of these vectors.

   The representation is calculated by computing the normalized distance of the multidimensional vectors, while taking into account the number of information elements in each class (cf. claim 3).

2. Claims: 1, 2, 4 - 7, 14 - 17, 23, 24, 26 - 29, 36 - 39

   The coordinates for the representations of the centroids of the classes are calculated by force-directed placement (cf. claim 4).

3. Claims: 1, 2, 9 - 11, 23, 24, 30 - 33

   The boundaries of the areas are calculated according to the Voronoi tessellation (cf. claim 9).